# EUROPEAN PATENT SPECIFICATION

(11) **EP 2 758 275 B1**
(45) Date of publication and mention of the grant of the patent: **06.04.2016**
(21) Application number: 12831445.7
(22) Date of filing: 13.09.2012
(51) Int. Cl.: B60R 9/048

(54) **BICYCLE FORK SECURING DEVICE**
FAHRRADGABEL-SICHERUNGSVORRICHTUNG
DISPOSITIF DE FIXATION DE FOURCHE DE VÉLO

(30) Priority: 13.09.2011 US 201161534279 P; 30.04.2012 US 201261640615 P; 30.04.2012 US 201261640609 P; 31.07.2012 US 201261678005 P
(43) Date of publication of application: 30.07.2014
(73) Proprietor: Hubco Automotive Limited, Christchurch 8042 (NZ)
(72) Inventor: SAUTTER, Chris, Portland, OR 97219 (US); CONDON, David, Wilsonville, OR 97070 (US); BUCKROYD, James, Portland, OR 97214 (US)
(74) Representative: Hoefer & Partner Patentanwälte mbB
(86) International application number: PCT/US2012/055246
(87) International publication number: WO 2013/040267

(56) References cited:
- US-A- 6 062 450
- US-A- 6 062 450
- US-A1- 2007 210 127
- US-A1- 2010 078 454
- US-A1- 2010 078 454
- US-B2- 7 757 914

## Description

### Field

The invention generally relates to carriers for securing bicycles on vehicles.

### Background

The popularity of recreational and competitive cycling has grown substantially in recent years, with a corresponding expansion in the number of different bike designs and configurations. As a result, the demand for bicycle carriers to transport bikes of varying dimensions and designs on cars and other vehicles also has grown significantly. US 2010/0078454 A1 discloses a bike rack according to the preamble part of claim 1

### Summary

There are various types of vehicle-mounted bicycle carriers available. One type includes a mount for securing the front fork of a bicycle after having removed the bicycle's front wheel. Typical designs for securing a fork are configured to accept the drop-outs of a standard 9 mm fork, and to secure the fork by clamping it to the mount, for example using a quick-release skewer. Newer fork designs that include through-holes as opposed to drop-outs often require an adapter to allow the fork to be secured to the mount.

A bicycle carrier may include a convertible fork mount. For example, a transforming fork mount capable of securing a standard 9 mm drop-out style fork and a 15 mm, through-hole 15QR-style fork may be included on a bicycle carrier. Accordingly, a transforming fork mount may have two positions or modes, a 9 mm position and a 15QR position for adapting to different types of bicycles.

### Brief Description of the Drawings

Fig. 1 is a perspective view of a fork mount bicycle carrier mounted to a pair of crossbars on top of a vehicle.
Fig. 2 is a perspective view of an illustrative 15QR fork straddling an illustrative fork mount device.
Fig. 3 is a sectional view of the fork and fork mount device of Fig. 2, showing extended retention pins.
Fig. 4 is a sectional view of the fork and fork mount device of Fig. 2, showing retracted retention pins.
Fig. 5 is a perspective view of a portion of the device of Fig. 2 showing an illustrative drive mechanism and retention pins.
Fig. 6 is a sectional view of an illustrative drop-out style fork straddling the fork mount device of Fig. 2, showing an illustrative skewer passing through the fork mount.
Fig. 7 is a cutaway perspective view of an illustrative central cam-style fork mount device with retracted retention pins.
Fig. 8 is a sectional elevation view of the fork mount device of Fig. 7 with extended retention pins.
Fig. 9 is a perspective view of another illustrative central cam-style fork mount device with extended retention pins.
Fig. 10 is a cutaway view of the fork mount device of Fig. 9.
Fig. 11 is a cutaway view of the fork mount device of Fig. 9 with retracted retention pins.
Fig. 12 is a perspective exploded view of the fork mount device of Fig. 9.
Fig. 13 is an isometric view of an illustrative cam cylinder for a central cam-style fork mount.
Fig. 14 is a perspective view of the fork mount device of Fig. 9 in 9 mm mode with an illustrative skewer passed through the fork mount.
Fig. 15 is a partial cutaway view of the fork mount device of Fig. 9 in 9 mm mode with an illustrative skewer passed through the fork mount and a skewer handle latched to the operating paddle.
Fig. 16 is a sectional side view of the fork mount device of Fig. 9 mounted to an illustrative carrier rail in a locked configuration.
Fig. 17 is a sectional side view of an illustrative distal end portion of a skewer showing a hidden adjustment feature.
Fig. 18 is a sectional side view of an illustrative cam-lock style fork mount clamp handle.
Fig. 19 is a side view of an illustrative cam-lock style fork mount device showing a clamp handle in an unclamped position.
Fig. 20 is a side view of an illustrative cam-lock style fork mount device showing a clamp handle in a clamped position.
Fig. 21 is a sectional perspective view of an illustrative cantilever-style fork mount device.
Fig. 22 is a sectional perspective view of an illustrative compressed bushing-style fork mount device.
Fig. 23 is a sectional elevation view of an illustrative docking clamp device clamped to an illustrative crossbar.
Fig. 24 is a perspective view of an illustrative docking clamp device showing operating levers in two positions.
Fig. 25 is an exploded perspective view of the docking clamp device of Fig. 24.
Fig. 26 is a perspective view of the docking clamp device of Fig. 24 with an upper cover removed.
Fig. 27 is a sectional side view of the docking clamp device of Fig. 24 with an upper cover removed.
Fig. 28 is a sectional side view of an illustrative docking clamp device with a component disposed on an upper surface, showing a locking pin in locked position.
Fig. 29 is a sectional side view of the docking clamp device of Fig. 28 with a component disposed on an upper surface, showing a locking pin in unlocked position.
Fig. 30 is a perspective view of an illustrative docking clamp device having two operating levers on the same side.
Fig. 31 is a bottom view of the docking clamp device of Fig. 30.
Fig. 32 is a perspective view of an illustrative one-piece docking clamp lever and cam follower.

### Detailed Description

The present disclosure provides a fork-mount bicycle carrier system attached to a pair of crossbars. In some embodiments, the bicycle carrier system includes a convertible fork mount having both 9 mm and 15 mm (or 15QR) modes, and a rear wheel tray attached to a carrier rail. A plurality of docking clamp devices may mount the carrier to the pair of crossbars attached to a roof of a vehicle. In some embodiments, the crossbars include a longitudinal T-slot, and the docking clamp devices include lever-operated cleats configured to clamp into the T-slot. Many alternatives and modifications which may or may not be expressly mentioned, are enabled, implied, and accordingly covered by the spirit of the disclosure.

An illustrative fork mount may include two hollow axle portions or retention pins, a housing, an external handle, and a drive mechanism. The retention pins may be placed in a first, retracted position to allow a 9 mm fork to straddle the housing, and further configured to allow a quick-release skewer to be placed through the fork drop-outs and through the hollow retention pins, clamping the fork to the fork mount. To instead secure a 15QR-style fork, the retention pins may be placed in a second, extended position after placing the fork in a straddling position where the axle holes are aligned with the retention pins. Extending the retention pins through the axle holes secures the fork to the fork mount. Wedge or spring portions may be included in the retention pins to further secure the fork to the fork mount. These wedge portions may be biased radially outward when the retention pins are fully extended, pressing against the inner perimeter of the axle holes of the fork.

A transforming fork mount may be driven between the first and second positions or modes by a drive mechanism. In some examples, a drive mechanism may be manually operated using a rotating knob operably attached to a disk having a spiraling slotted-track surface. A track follower at a proximal end of each retention pin may interface with this slotted track, and may cause each pin to be driven laterally when the knob and disk are rotated. In other examples, a pivoting, paddle-type handle may be operably attached to a helical drive that acts to bias the retention pins laterally when the handle is pivoted. In either example, the retention pins may be further biased by helical springs disposed coaxially with the pins. In some examples, the pivoting handle may be placed in two modes, one with the handle operatively connected to the drive and able to reposition the pins, and one with the handle disconnected from the drive.

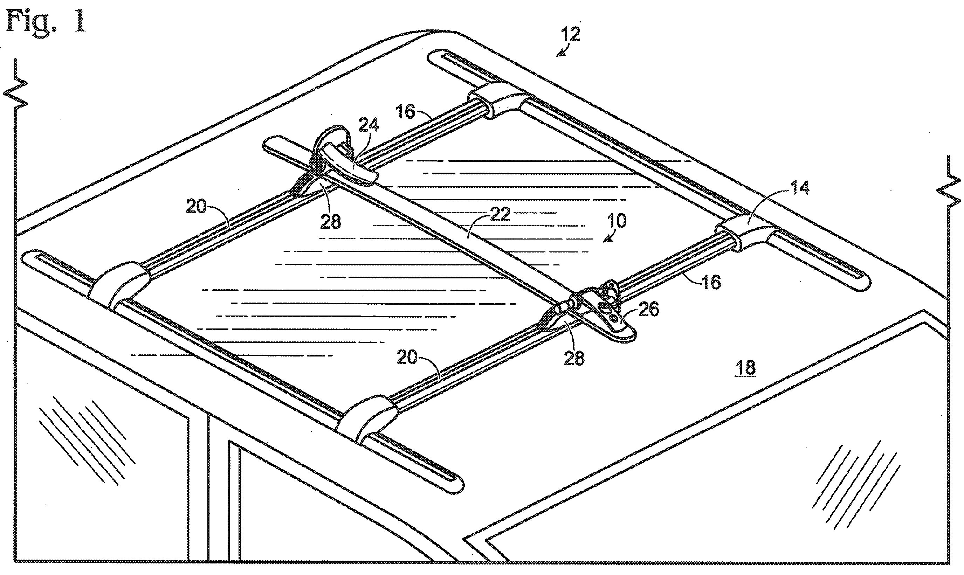

Fig. 1 shows an illustrative fork mount bicycle carrier generally indicated at 10. Fork mount bicycle carrier 10 may be attached to a rooftop rack system 12 that includes multiple towers or feet 14 attaching crossbars 16 to the rooftop of a vehicle 18. Rack system 12 may include any suitable rack system configured to carry objects on a vehicle rooftop. In some examples, cross bars 16 of rack system 12 may include a longitudinal T-slot 20.

Fork mount bicycle carrier 10 may include a carrier rail 22 having an elongate body, a rear wheel tray 24 attached proximate one end of the rail, and a fork attachment 26 attached proximate the other end of the rail. Rear wheel tray 24 may be a curvilinear tray configured to cradle a rear wheel of a bicycle (not shown), at a distance from fork attachment 26 appropriate for a front fork of the bicycle to be secured to the fork attachment. A binding device may be included to further secure the rear wheel to the tray.

Carrier 10 may be mounted to rooftop crossbars 16 using one or more coupling devices or couplers 28. Each coupler 28 may be any suitable device configured to secure bicycle carrier 10 to crossbar 16. For example, coupler 28 may be configured for clamping to longitudinal slot 20 in crossbar 16. In other examples, coupler 28 may be configured for clamping an external surface of a crossbar. In other examples, coupler 28 may be configured for adaptively clamping to differently shaped crossbars, including round, square, oval, and elliptical. In still other examples, coupler 28 may be configured for clamping an aerodynamically shaped crossbar.

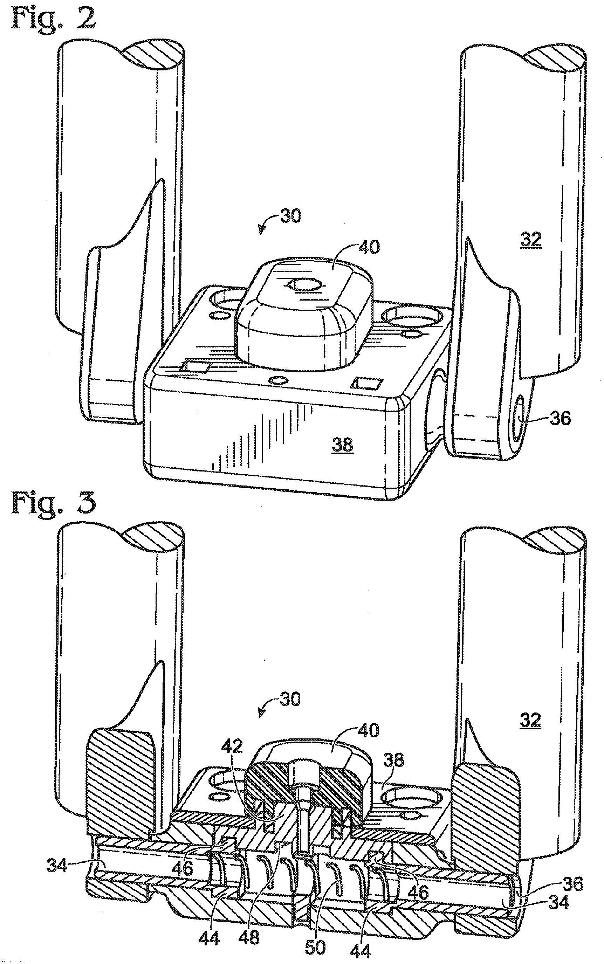

Turning to Figs. 2-6, a first embodiment of a fork attachment 26 is shown. Specifically, a convertible fork mount is generally indicated at 30. Convertible fork mount 30 may be capable of securing a standard 9 mm drop-out style bicycle fork as well as a 15 mm, through-hole 15QR-style fork. Accordingly, fork mount 30 may be selectively convertible between two modes: a 15QR mode in which axle portions or retention pins are extended to engage the axle holes of the 15QR fork, and a 9 mm mode in which retention pins are retracted and a skewer may be passed through a hollow center of the pins to secure a drop-out style fork to the mount.

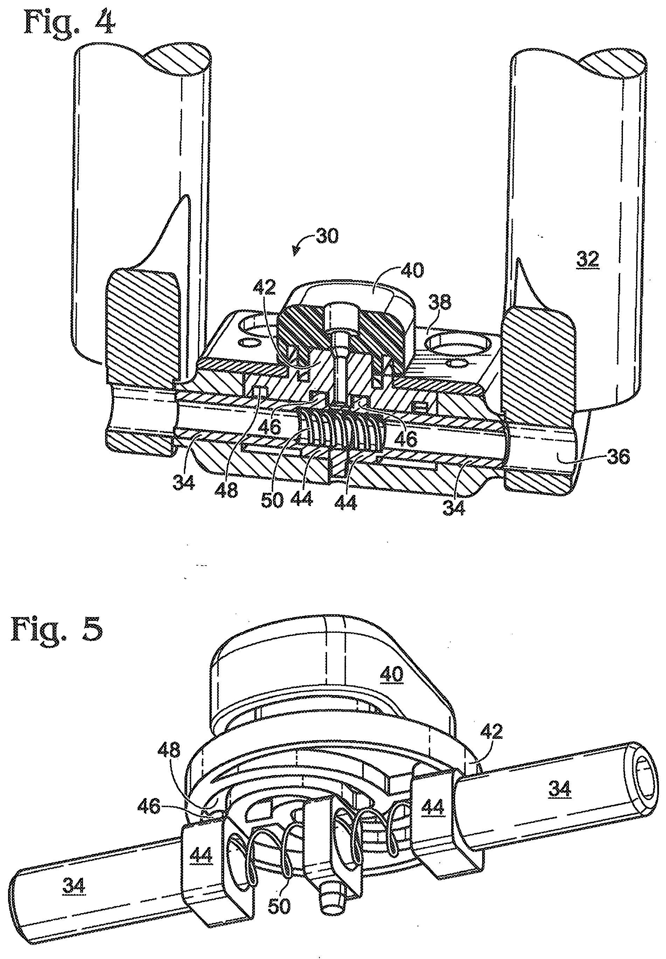

Figs. 2-4 show an illustrative 15QR fork 32 in a straddling position to be attached to fork mount 30. Fig. 2 is a perspective view, and Figs. 3 and 4 are sectional views showing retention pins 34 being extended and retracted, respectively, into and out of axle holes 36 of fork 32. Convertible fork mount 30 may include two hollow retention pins 34, a housing 38, an external manipulator 40, and a drive mechanism 42.

Retention pins 34 may each be any suitable elongate member configured to fit snugly within a 15QR axle hole, to provide an axial passageway capable of allowing passage of a standard 9 mm skewer, and further configured to be driven axially by drive mechanism 42. Retention pins 34 may be generally referred to as axle portions. In some examples, retention pins 34 may be include hollow cylinders having an outer diameter sized to fit within a 15QR axle hole, an inner diameter sized to allow passage of a 9 mm skewer, and a flange 44 at a proximal end of the pin. Flange 44 may be any suitable collar projecting from the outer diameter of each pin 34, and may be configured to retain the pin within housing 38 as well as to provide a drive interface such as drive interface member 46 for interacting with a separate driving component.

Housing 38 may be any suitable case or covering structure for housing the components of fork mount 30, and may be configured to protect inner components from the environment while also providing a mounting surface and guiding structures for the components. Housing 38 may be configured to fit, at least in part, between the forks of a bicycle, and to have sufficient structural strength to support the forces inherent in supporting the weight and moment of a mounted bicycle. Housing 38 may also be configured to provide a mounting interface for attaching fork mount 30 to a carrier rail 22 and/or coupler 28.

External manipulator 40 may be any suitable structure configured to provide a manual interface for a user to operate drive mechanism 42 and thereby transform or convert fork mount 30 between 9 mm and 15QR modes. For example, external manipulator 40 may be a handle, paddle, pushbutton, slide, switch, or any other suitable manipulator. In the example shown in Figs. 2-4, manipulator 40 is configured as a rotary knob. The rotary knob in this example may be affixed to drive mechanism 42, and may accordingly transfer any rotational torque imparted by a user from the knob to the drive mechanism.

Drive mechanism 42 may be any suitable structure configured to convert mechanical manipulation of manipulator 40 into a force that may be imparted on pins 34 to drive the pins axially. For example, drive mechanism 42 may be a plate having a spiral-track cam 48 on a lower surface. Spiral-track cam 48 is shown in greater detail in Fig. 5. In this example, rotation of the knob will rotate the drive mechanism, which causes the spiral-track cam to rotate. Drive interface members 46 may be configured as cam followers, and may be slidingly engaged in the spiral-track cam. Because pins 34 are radially confined within housing 38, rotation of cam 48 may urge pins 34 axially into extended or retracted positions. Retention pins 34 may be axially biased by a biasing member or members. For example, pins 34 may be biased outward by biasing spring 50.

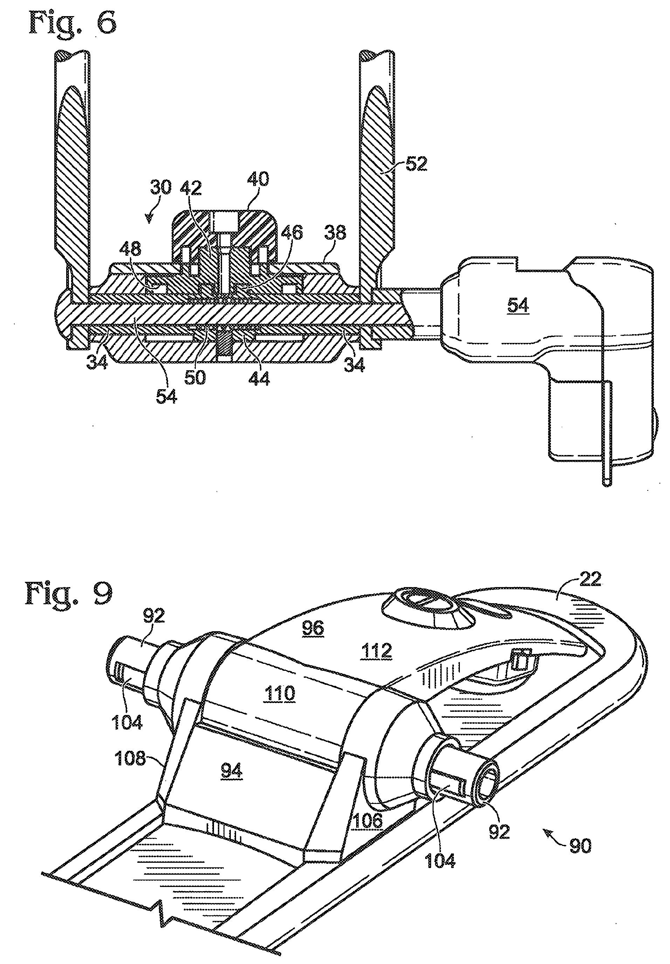

Fig. 6 is a sectional view of fork mount 30 showing a standard 9 mm bicycle fork 52 attached to mount 30 using a skewer 54. In the example shown, skewer 54 is an example of a skewer as disclosed in U.S. Patent No. 7,726,528, which is hereby incorporated by reference in its entirety for all purposes. However, any suitable skewer may be used to attach a fork 52. As shown in Fig. 6, pins 34 may be retracted to allow mounting of the fork using skewer 54, which may be passed through the hollow centers of pins 34. In this example, drive mechanism 42 must overcome the biasing of spring 50 in order to retract pins 34. A mechanical latch may be included to ensure drive mechanism 42 is not repositioned by the biasing force of spring 50. However, in this example, spiral-track cam 48 may be configured such that the static force of track 48 on drive interface member 46 may be sufficient to prevent any unintended repositioning.

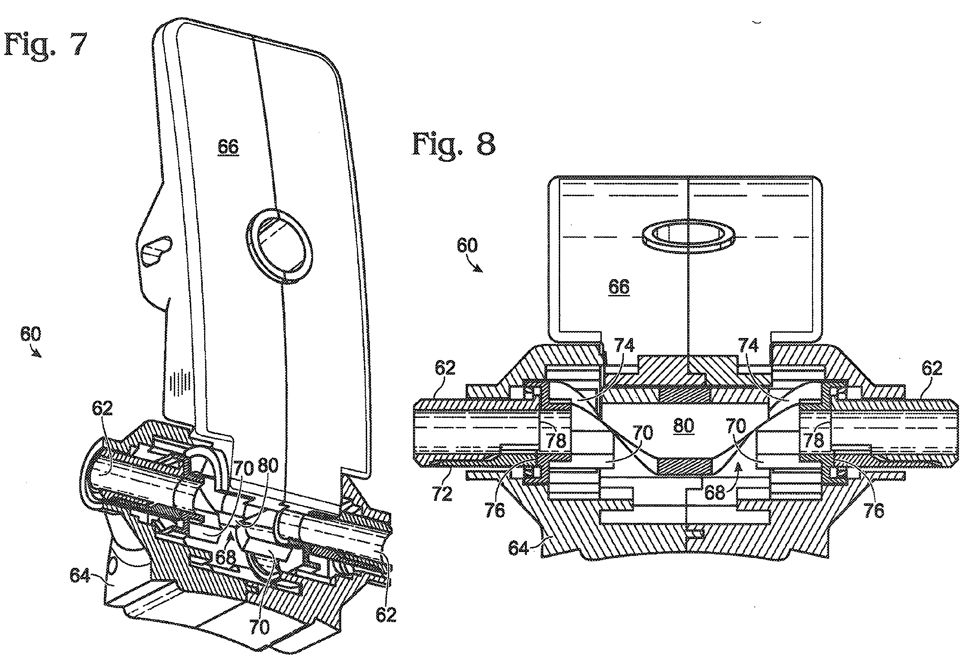

Turning to Figs. 7-8, a second embodiment of a fork attachment 26 is shown. Specifically, a convertible fork mount 60 is shown, having in this example a paddle manipulator rather than a rotary knob. In this embodiment, a paddle or cover may be pivoted up and down to rotate an attached central cam that is substantially coaxial with the retention pins. The rotation of the cam in turn repositions retention pins into extended and retracted positions. Unlike the previous embodiment, the central cam and the retention pins may be substantially coaxial, and the central cam may accordingly include a hollow cylindrical portion to allow passage of a skewer. The paddle may be selectively connectable to the central cam, and therefore may have two modes: a connected mode in which the paddle drives the cam and pins, and a disconnected mode in which the paddle does not drive the cam and pins. As before, however, fork mount 60 itself may be convertible between a 9 mm position as shown in Fig. 7 and a 15QR position as shown in Fig. 8.

Fork mount 60 may include two hollow retention pins 62, a housing 64, an external manipulator 66, and a drive mechanism 68. Similar to retention pins 34, retention pins 62 may each be any suitable member configured to externally accommodate a 15QR fork axle hole and to internally accept a 9 mm skewer. Retention pins 62 may each include a cam follower 70 at a proximal end, and may include a clamping portion such as a wedge 72 proximate a distal end. Cam follower 70 may be any suitable structure coaxial with pin 62 between pin 62 and the central cam. Cam follower 70 may have a proximal cam follower surface 74 configured to follow the central cam, and a distal surface 76 configured to interface with a proximal end of pin 62.

Cam follower surface 74 may be shaped to cooperate with the central cam to urge the respective pin 62 in an axial direction. For example, cam follower surface 74 may be a helical or curvilinear proximal edge of each cam follower 70. In some examples, cam follower surface 74 may include a proximal edge of a pin 62. Distal surface 76 of each cam follower 70 may interface with a proximal end 78 of a pin 62 in order to transfer axial force to the pin. Distal surface 76 may interface with wedge 72 to impart an axial force on wedge 72 once pin 62 is extended beyond a certain distance. This axial force may pivot a distal end of wedge 72 in a radial direction, i.e., outward from pin 62, providing further clamping force on an inner perimeter of a 15QR axle hole.

Similar to housing 38, housing 64 may be any suitable structure configured to protectively house components of fork mount 60, to provide a stable and sufficiently strong interface for attaching a bicycle fork, and to provide a mounting interface for attaching fork mount 60 to a carrier rail 22 and/or crossbar 16.

External manipulator 66 may be any suitable structure configured to provide a pivoting lever for rotating drive mechanism 68. External manipulator 66 may be configured as a paddle, cover, and/or handle, and may also include further components used for latching and/or locking the manipulator. Manipulator 66 may operate drive mechanism 68 by pivoting up and down. However, it may be desired to keep manipulator 66 in a down position during normal use or when in a mode in which the manipulator would normally need to be raised if connected. Accordingly, manipulator 66 may be selectively attached and detached from drive mechanism 68 to allow manipulator 66 to be raised and/or lowered without affecting the position of the drive mechanism.

In this embodiment, drive mechanism 68 may include a central cam 80 and cam followers 70 (described above). Central cam 80 may be any suitable structure operatively attached to manipulator 66, disposed between pins 62; and configured to drive pins 62 apart or together when rotated coaxially with the pins. In the example depicted in Figs. 7 and 8, central cam 80 is configured as a helical wedge that will present a progressively wider portion of the cam to cam followers 70 as cam 80 is rotated downward by manipulator 66. This in turn forces cam followers 70 apart, forcing pins 62 apart, and eventually forcing wedges 72 outward. The results of this operation may be seen in Fig. 7, where central cam 80 is rotated up, allowing pins 62 to retract, and Fig. 8, where central cam 80 has been rotated downward, causing pins 62 to extend. Note that in Fig. 8, wedges 72 have not yet been extended.

Figs. 9-12 show another embodiment of fork attachment 26 similar to fork mount 60. Specifically, fork mount 90 may be another example of a convertible, pivoting-manipulator fork mount such as fork mount 60. However, in this embodiment, a central cam may include a cam cylinder having a groove or track in which may ride cam follower members located on the retention pins. Additionally, fork mount 90 may include latching and locking features not described above. It is noted that these features may be included in any embodiment, including those described above, but they are included in the description of fork mount 90 for convenience. As with fork mount 60, fork mount 90 may be configured with a manipulator arm as a pivoting lever centrally mounted on the body of the fork mount, and configured to pivot vertically toward and away from the rooftop of the vehicle on which the carrier is mounted. Other configurations are possible. For example, the manipulator arm may be mounted horizontally or off to one side rather than centrally.

As with previous embodiments, convertible fork mount 90 may include two hollow retention pins 92, a housing 94, an external manipulator 96, and a drive mechanism 98. Similar to retention pins 34 and 62, retention pins 92 may each be any suitable member configured to externally accommodate a 15QR fork axle hole and to internally accept a 9 mm skewer. Retention pins 92 may each include one or more cam follower members 100 at a proximal end, a retention flange 102 between the proximal and distal ends of the pin, and/or a clamping portion such as a spring 104 proximate a distal end. Similar to wedges 72, springs 104 may provide further clamping force on an inner perimeter of a 15QR axle hole. However, instead of being urged axially and thereby forced outward, springs 104 may be strips of metal formed such that each spring 104 is biased outward from a pin 92. When pins 92 are retracted, an internal surface of housing 94 may constrain springs 104 and keep the springs pressed against the pins. As each pin 92 is extended, a portion of spring 104 is uncovered and allowed to flex outward due to the aforementioned bias.

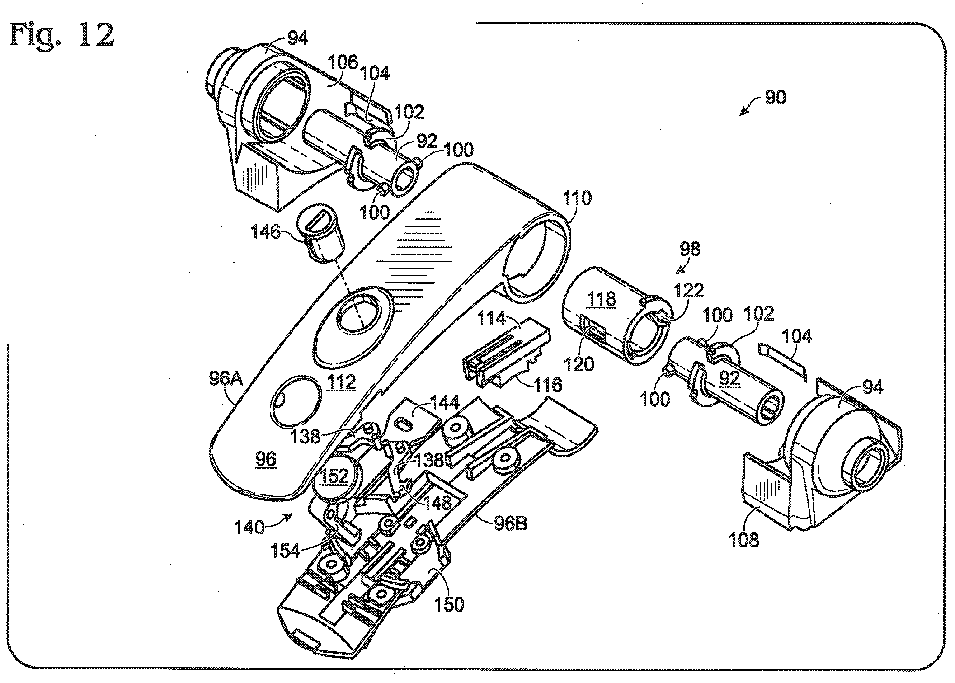

Housing 94 may serve the same functions as previously described housings 38 and 64. Housing 94 may include multiple portions, such as housing portions 106 and 108 shown in the exploded view of Fig. 12. A portion of manipulator 96 may also form a portion of housing 94. For example, portion 110 of manipulator 96 may be considered a part of housing 94 along with portions 106 and 108. The housing of a fork mount may also be referred to as the body of the device.

External manipulator 96 may be another example of a pivoting, paddle-type lever similar to external manipulator 66. In this embodiment, external manipulator 96 may include center portion 110 and a handle portion 112, and may be selectively connectable to drive mechanism 98. For example, external manipulator 96 may be selectively connectable to drive mechanism 98 using a sliding switch or mechanical connector 114. Connector 114 may include a user-accessible button 116 and may connect manipulator 96 to a central cam cylinder 118 of drive mechanism 98 by fitting a male member into a corresponding female aperture. However, any suitable selectively switchable connector may be used.

Connecting manipulator 96 to drive mechanism 98 may enable operation of the drive mechanism, and may thereby place the manipulator into a connected mode as described above. It may be desired to detach manipulator 96 from the drive mechanism, for example in order to place the fork mount into a 9 mm position and then lower manipulator 96 without changing a position of the drive. In some examples, a connected manipulator may be lowered extend the retention pins, and raised to retract the retention pins. In other examples, the effect of raising and lowering the manipulator may be reversed.

From the above description, it should be clear that the paddle manipulator of a central cam type fork mount may be placed in two modes. In a first mode, the paddle manipulator may be operatively connected to the central cam, for example using a switch connector such as connector 114. In this mode, operation of the paddle may cause the retention pins to be extended and retracted. This mode would be suitable for use with a 15QR fork, because the retention pins would normally be retracted until the forks are in place straddling the fork mount, and then the retention pins would normally be extended into the axle holes of the fork. In a preferred embodiment, the paddle manipulator would be pivoted to a raised position to retract the retention pins, then pivoted to a lowered position to extend the pins into the axle holes of the fork. Accordingly, this first (connected) mode of the paddle manipulator may be considered a 15QR mode. In a second mode, the retention pins may be retracted, and the paddle manipulator may be disconnected from the cam cylinder. This mode would be suitable for a 9 mm fork, because a skewer may be used to attach the fork, and no retention pin manipulation is required. Accordingly, this second (disconnected) mode of the paddle manipulator may be considered a 9 mm mode.

Drive mechanism 98 in this embodiment may include central cam cylinder 118. Central cam cylinder 118 may be a hollow cylindrical component disposed between and coaxially with pins 92. Central cam cylinder 118 may include aperture 120 for interfacing with connector 114, and may include a helical groove or track 122 for interfacing with cam follower members 100. In this example, central cam cylinder 118 may be sized such that a proximal end 124 of each retention pin 92 will fit within the axial hollow of central cam cylinder 118. Additionally, the cam follower members 100 of the retention pins 92 may protrude radially from the retention pins 92, fitting into track 122.

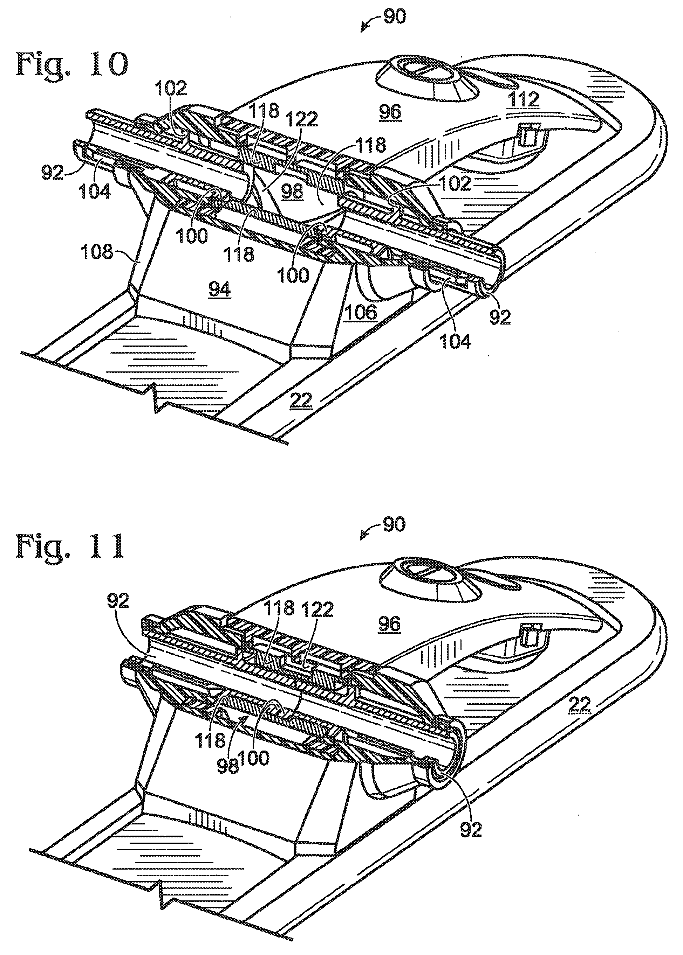

In this example, track 122 may be configured such that pivoting of manipulator 96 rotates cam cylinder 118 and causes track 122 to interact with cam follower members 100 to simultaneously urge retention pins 92 into extended or retracted positions. With specific reference to Fig. 10, a cutaway view shows fork mount 90 with pins 92 in an extended position. As depicted, respective cam follower members 100 of the two retention pins have been urged laterally away from each other by cam track 122 of central cam cylinder 118. Conversely, with specific reference to Fig. 11, a cutaway view shows fork mount 90 in with pins 92 in a retracted position. As depicted, respective cam follower members 100 of the two retention pins have been urged laterally toward each other by cam track 122 of central cam cylinder 118. As explained above, cam cylinder 118 may be rotated by pivoting external manipulator 96.

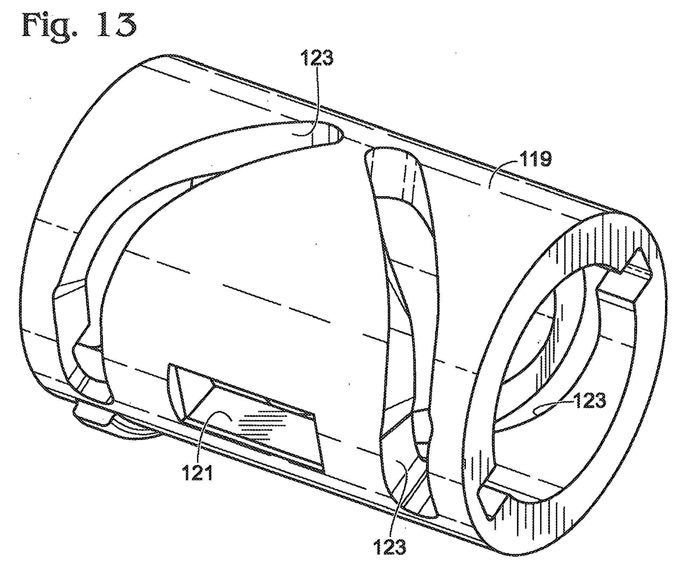

Fig. 13 is an isometric view of another embodiment of a cam cylinder such as cam cylinder 118. Specifically, cam cylinder 119 may include an aperture 121 for interfacing with connector 114, and multiple cam tracks 123 for interfacing with cam follower members 100. Cam cylinder 119 may be substantially identical to cam cylinder 118 with an exception being that the cam tracks of cylinder 119 pass completely through the cylinder wall.

From the above description, it should be clear that manipulator 96 may be changed from a 9 mm mode to a 15QR mode in the following fashion. Assuming retention pins 92 are initially in a retracted position, and assuming manipulator 96 is initially in a disconnected mode, a user may first fully raise manipulator 96. Connector 114 may be accessible from an underside of the manipulator. Accordingly, raising the manipulator may expose the connector for user interaction. The user may then connect manipulator 96 to cam cylinder 118 (or 119) by manipulating button portion 116 to slide switchable connector 114 into aperture 120 (or 121). At this point, manipulator 96 is connected to the cam cylinder. The user may then place a 15QR fork in straddling position on the fork mount, and may pivot manipulator 96 downward to extend retention pins 92 into the axle holes of the fork. The user may then also pivot the manipulator back up to retract the pins and remove the bicycle fork from the fork mount. Note that connector 114 may be inaccessible when manipulator 96 is in a lowered position. Accordingly, disconnecting the connected manipulator may be prevented by latching and/or locking the manipulator in a lowered position. Repositioning of the retention pins may also be prevented by keeping the manipulator in a lowered position, because the engaged connector 114 will prevent rotation of the cam cylinder.

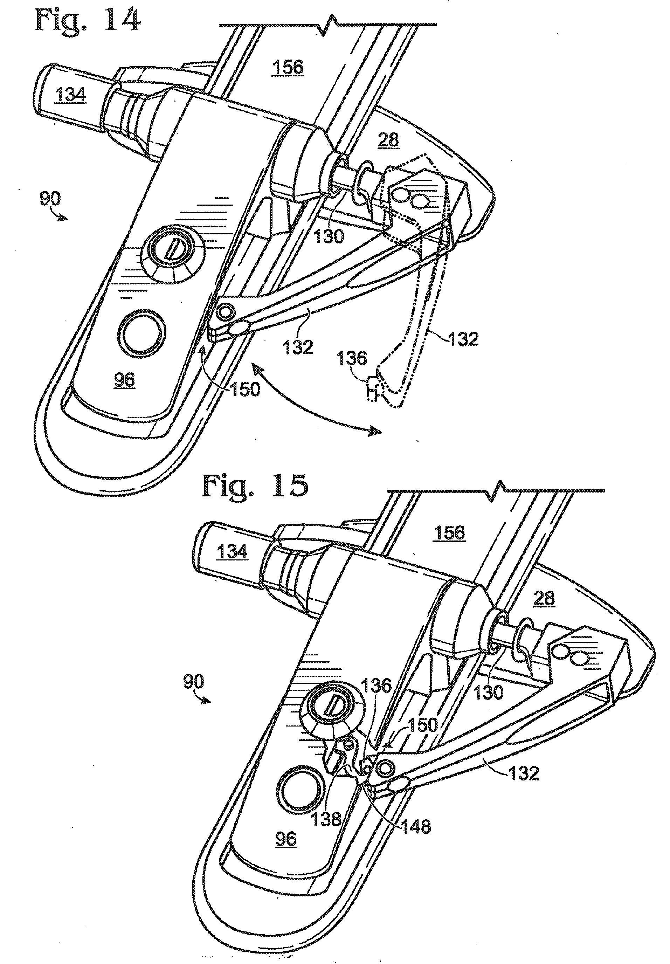

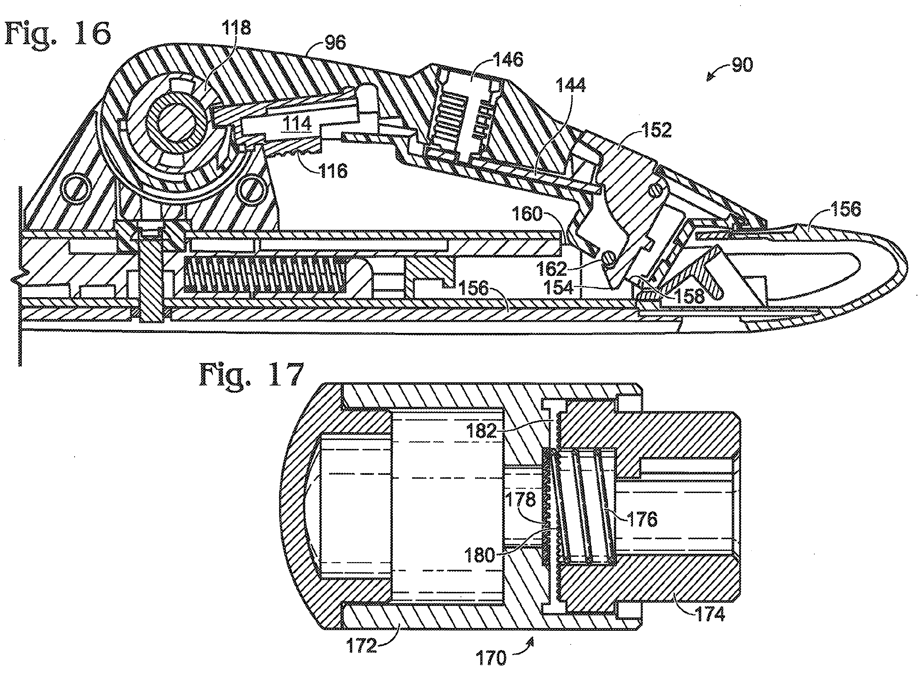

Turning to Fig. 14, fork mount 90 is shown in 9 mm position with a skewer 130 passed through retracted hollow retention pins 92. As depicted in Fig. 14, skewer 130 may provide clamping force to a bicycle fork when a cam handle 132 is pivoted toward the fork mount, pulling skewer end portion 134 toward handle 132, effectively shortening the length of the skewer. Skewer end portion may provide an adjustability mechanism to skewer 130, as described further below with reference to Fig. 17.

Handle 132 may include a hook 136 configured to interface with a latch 138 of latching and locking assembly 140 located in external manipulator 96. As shown in Figs. 12 and 16, and partially in Fig. 15, latching and locking assembly 140 may include latch 138, a paddle release assembly 142, a lock plate 144, and a lock barrel 146, all mounted at least partly within manipulator 96, between upper portion 96A and lower portion 96B of manipulator 96. Latch 138 may be a two-sided pawl assembly, pivotably mounted to lock plate 144 such that engagement portions 148 may be positioned within an opening 150 on each lateral side of the manipulator paddle. Lock plate 144 may be any suitable structure configured to provide a mounting surface to latch 138 and to be slidably positionable in two positions, a locked position toward the distal end of external manipulator 96 and an unlocked position toward the proximal end of external manipulator 96. Latch 138 may be mounted to lock plate 144 with a double-pivot connection.

In this example, moving lock plate 144 into the locked position causes engagement portions 148 of latch 138 to pivot into openings 150, engaging hook 136 of any handle 132 present. Engagement portions 148 may also be configured as pawls to allow hook 136 to be latched even after engagement portions 148 are in a locking position. However, engagement portions 148 may not disengage a hook 136 once engaged unless lock plate 144 is repositioned. Moving lock plate 144 into the unlocked position will cause latch 138 to pivot the engagement portions in an opposite direction, disengaging hook 136.

Lock plate 144 may also lock paddle release assembly 142. Part of lock plate 144 may be located below at least a portion of paddle release assembly 142 when lock plate 144 is in the locked position, physically blocking any repositioning of paddle release assembly 142. In the unlocked position, lock plate 144 may relocate to a position leaving paddle release assembly 142 free to move unimpeded. Fig. 16 shows an example of the relative positions of various components when lock plate 144 is in locked position.

Lock barrel 142 may be any keyed lock capable of interfacing with lock plate 144 to selectively position lock plate 142 between the locked and unlocked positions when lock barrel 142 is repositioned. Lock barrel 142 may only be operable using a key (not shown) paired to the lock barrel, thus providing a level of security.

Paddle release assembly 142 may include a pushbutton 152 and a hook 154, as best viewed in Figs. 12 and 16. Paddle release assembly 142 may be any suitable assembly configured to selectively latch and unlatch external manipulator 96 from an underlying structure to which the fork mount is attached, such as a carrier rail 156, thereby preventing the repositioning of manipulator 96.

In the example shown in Fig. 16, hook 154 is configured to pass through an aperture 158 in a lower surface of external manipulator 96, to pass through another aperture 160 in carrier rail 156, and to selectively engage latch 162. Hook 154 may be pivotably attached to external manipulator 96 and may be spring biased toward a latching position with latch 162. Pushbutton 152 may be operatively connected to hook 154, such that depressing pushbutton 152 may unlatch hook 154 from latch 162 if engaged. Accordingly, as described above, lock plate 144 may prevent the unlatching of hook 154 by blocking the ability to depress pushbutton 152.

Fig. 17 shows an enlarged sectional view of a hidden adjustment feature 170 that may be present in skewer end portion 134. Adjustment feature 170 may be any suitable structure configured to selectively engage a manual adjustment actuator with the adjustment head of a skewer. For example, manual adjustment knob 172 may be spring biased in a position aligned with but separated from adjustment head 174 using helical spring 176. Radial teeth 178 on knob 172 may face corresponding radial teeth 180 on head 174 across a small gap 182.

A user may adjust the final length of skewer 130 by first depressing knob 172 in an axial direction to overcome the spring bias of spring 176 and engage teeth 178 with teeth 180. By maintaining this engagement, a user can then rotate the adjustment knob 172, which will in turn rotate the engaged adjustment head and lengthen or shorten skewer 130. Releasing axial pressure on knob 172 will disengage the teeth and prevent further adjustment.

It is also noted that handle 132 may be configured to be selectively disengaged from skewer 130 in order to pass skewer 130 through the hollow retention pins of a fork mount without needing to remove end portion 134. For example, handle 132 may be keyed to an end of skewer 130 such that rotating handle 132 for a certain distance in a plane orthogonal to the axis of skewer 130 may cause the keying to align in such a way that the handle may be slid from the skewer.

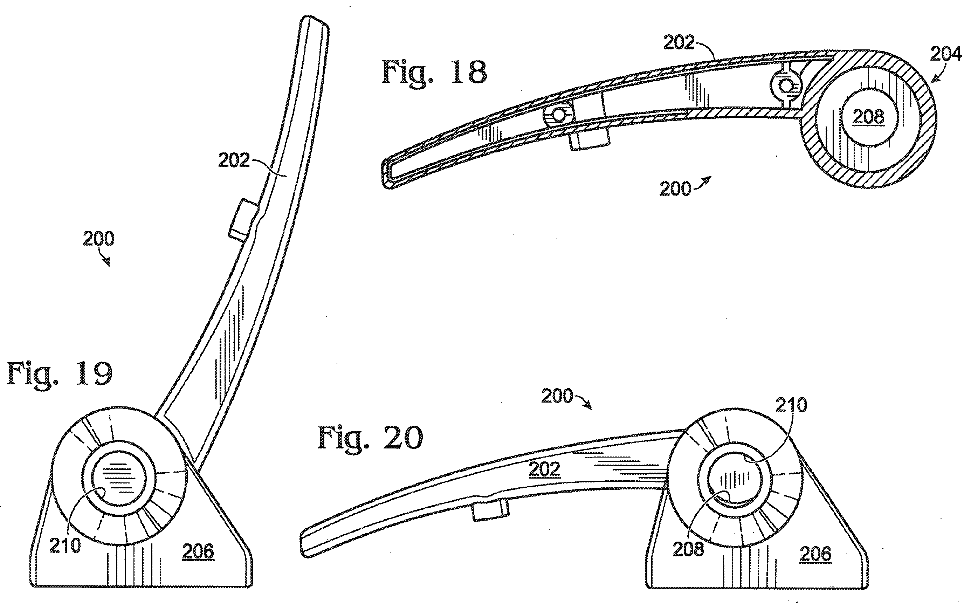

Figs. 18-22 show examples of fork attachment 26 that each mount a bike fork by clamping to the existing axle of the 15QR fork-equipped bicycle rather than providing retention pins. Existing axles may typically be easily removed from a bicycle and utilized for this purpose. Because existing axles are used in these fork attachments, firm clamping must be facilitated by the following examples to prevent rattling and potential damage to the axle. A 15QR axle is discussed. However, one skilled in the art will understand that any size of axle may be accommodated, with a corresponding alteration of the diameter of a corresponding passageway.

Figs. 18-20 show an eccentric cam fork mount generally indicated at 200. Fork mount 200 may include an external manipulator 202 connected to a cylindrical axle, clamp 204, pivotably mounted to a housing 206. In this example, cylindrical axle clamp 204 may include an offset or eccentric hole 208, best shown in the sectional view of Fig. 18. Offset hole 208 may be offset from center such that when external manipulator 202 is in a raised position, as shown in Fig. 19, hole 208 aligns with corresponding apertures 210 in housing 206, allowing a 15QR axle (not shown) to be passed through the apertures and hole. However, when external manipulator 202 is in a lowered position, as shown in Fig. 20, clamp 204 is rotated and hole 208 is offset from apertures 210 (as shown) imparting a clamping force on the axle.

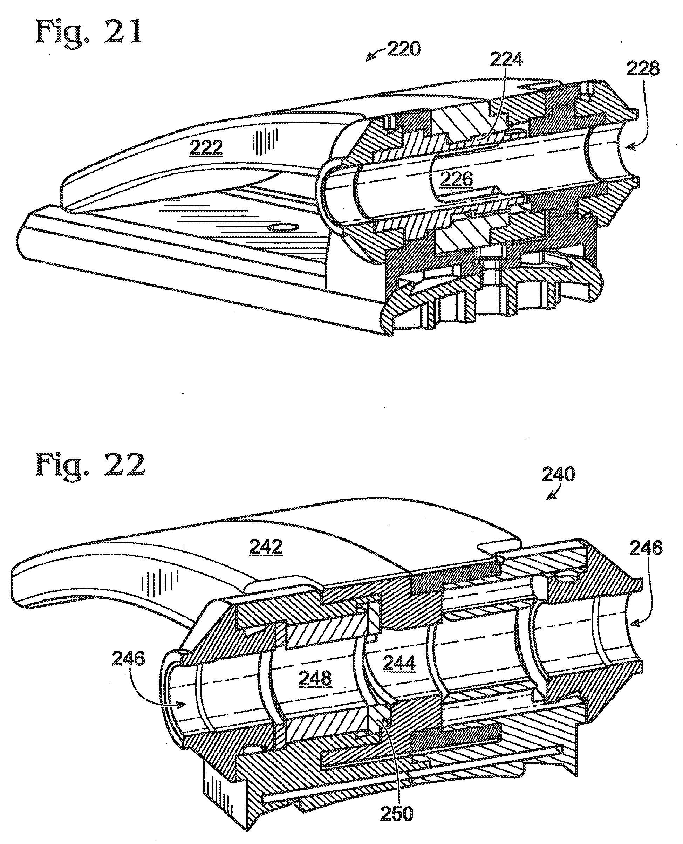

Fig. 21 shows another example fork attachment configured to clamp an existing 15QR axle. Cantilever fork mount 220 may include an external manipulator 222, a cam portion 224 operatively connected to the manipulator, and at least one cantilever portion 226 located adjacent an axle passageway 228 as shown in the cutaway view of Fig. 21. In this example, operation of manipulator 222 causes cam portion 224 to press against cantilever portion 226, displacing cantilever portion 226 radially inward into passageway 228. A 15QR axle located within the passageway would thereby be clamped in place by the cantilever portion pressing against the axle.

Fig. 22 shows another example of a fork attachment configured to clamp an existing 15QR axle. Rubber bushing clamp fork mount 240 may include an external manipulator 242, a helical cam portion 244 operatively connected to the manipulator, a 15QR axle passageway 246, a flexible or semi-flexible bushing 248, and a plate 250 as shown in the cutaway view of Fig. 22. In this example, repositioning of manipulator 242 causes helical cam portion 244 to impart axial force on plate 250. Plate 250 then translates axially, compressing bushing 248 and causing deformation of bushing 248 radially into passageway 246. An axle located within the passageway would thereby be clamped in place by the bushing pressing against the axle.

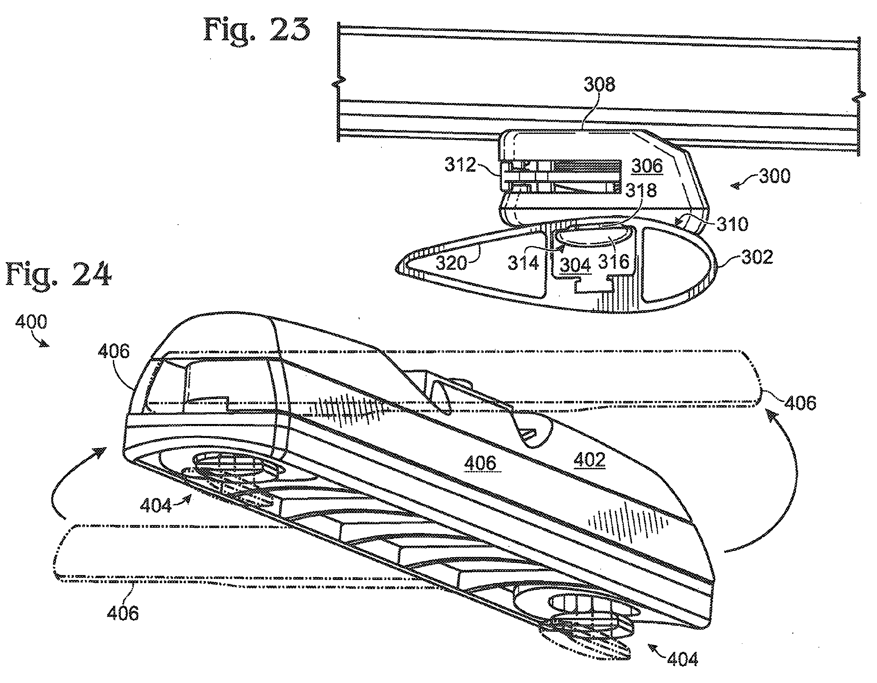

Bicycle carrier 10 may include a fork mount such as fork mounts 30, 60, 90, 200, 220, or 240, a wheel tray, and/or other suitable components and assemblies mounted to a carrier rail. In some examples, the combination, or any individual component may be mounted to one or more standard crossbars using known clamping devices. In other examples, the combination may be mounted to one or more T-slot crossbars using one or more docking clamps. Figs. 23-32 depict various embodiments of couplers 28 configured to provide an upper mounting interface for a carrier rail and/or other suitable assemblies, as well as a lower clamping interface for quickly attaching and detaching a dock from the T-slot of a crossbar. These examples of couplers 28 are also referred to as "docks."

Turning to Fig. 23, an illustrative dock is generally indicated at 300 and shown in a sectional elevation view mounted to an illustrative crossbar 302 having a T-slot 304. Dock 300 may include a body 306, an upper mounting interface 308, a lower mounting interface 310, and one or more operating levers 312. Upper mounting interface 308 may include one or more mounting structures such as threaded holes, threaded bolts, mounting apertures, slots, latches, clamps, and the like. In some examples, dock 300 may be incorporated into a device or assembly such that upper mounting interface 304 is eliminated.

Lower mounting interface 310 may include one or more shaped cleats 314 protruding from a lower surface of body 306. Each cleat 314 may include a head 316 and a shaft 318 operatively attached to a respective operating lever 312 such that pivoting the operating lever through 90 degrees causes cleat 314 to rotate 90 degrees around a long central axis of shaft 318, and also causes cleat 314 to translate a predetermined distance along the long axis of shaft 318.

In some examples, operation of the clamping mechanism may be described beginning with dock 300 clamped to crossbar 302 as shown in Fig. 23. Pivoting operating lever 312 away from body 306 by 90 degrees causes cleat 314 to rotate to place a long axis of head 316 into alignment with a long axis of T-slot 304. This rotation allows head 316 to pass unimpeded through the mouth or opening of T-slot 304. Pivoting operating lever 312 in this manner also causes head 316 of cleat 314 to move away from body 306. The net effect of this rotation and translation may be to disengage cleat 314 from crossbar 302, because a wall 320 of crossbar 314 will no longer be clamped between body 306 and head 316. Conversely, pivoting operating lever 312 closed, or 90 degrees back toward body 306 may result in clamping of wall 320 by cleat 314 as head 316 moves toward body 306 and rotates to place a long axis of head 316 ninety degrees out of alignment with a long axis of T-slot 304.

Figs. 24-27 show another example of a dock such as dock 300. Specifically, opposing-lever dock 400 may include a body 402, two cleat assemblies 404, and two operating levers 406. Fig. 24 shows a perspective view of dock 400. The pivoting of operating levers 406 is illustrated in phantom lines as they pivot outward from opposite sides of body 402. Fig. 24 also shows the resulting rotation and translation of the cleats as levers 406 are pivoted outward.

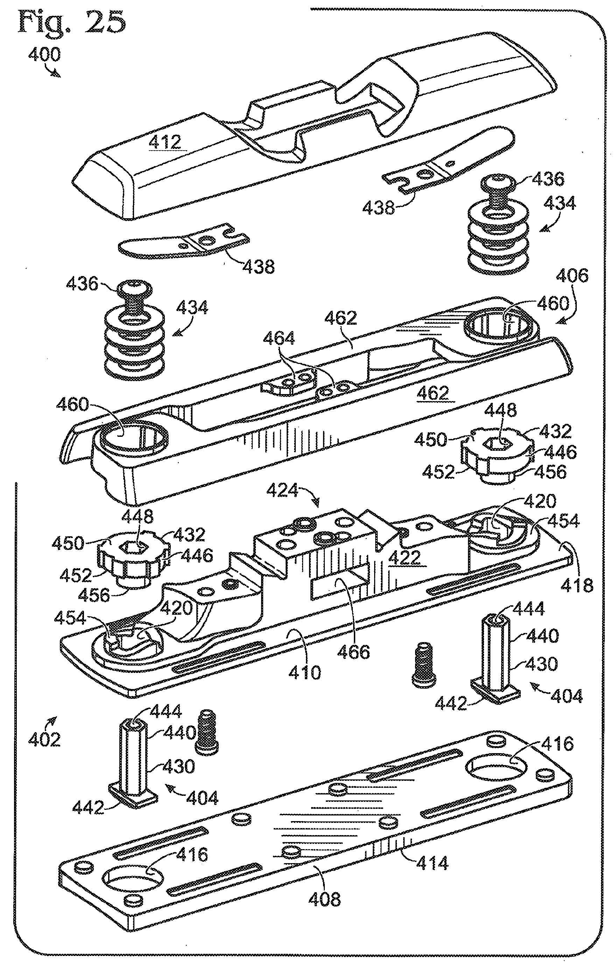

As best seen in the exploded view of Fig. 25, body 402 may include a base pad 408, a base 410, and a cover 412. Base pad 408 may include a mounting surface 414 shaped to conform to a surface of a crossbar, and two apertures 416 each sized to allow free passage of a cleat of cleat assemblies 406. Base 410 may be attached to base pad 408, and may be any suitable structure configured to provide various mounting points, apertures, and control surfaces for attaching the remaining components of dock 400. In some examples, base 410 may include an outer flange 418 that may be friction fit to base pad 408. Base 410 may include two apertures 420 for attaching cleat assemblies 404, the apertures being disposed on either side of a central block structure 422 that may include an upper surface 424 configured for mounting external components such as a carrier rail and/or fork mount. Cover 412 may be any suitable upper rigid casing or cap configured to cover at least part of base 410 and to provide protection for internal components as well as to provide aesthetic appeal and improved aerodynamics.

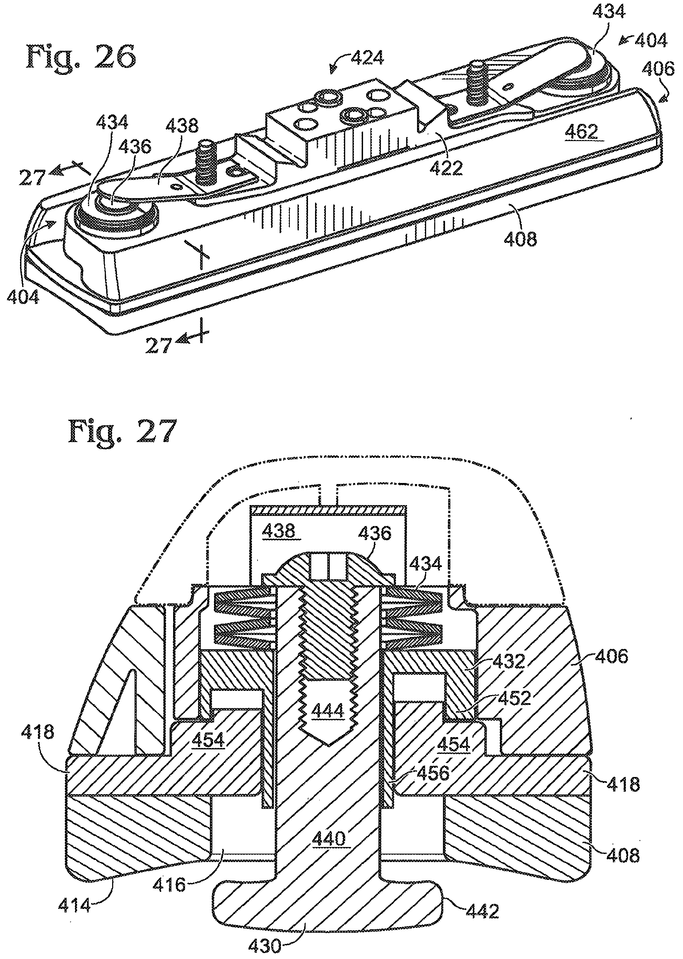

Each cleat assembly 404 may include components configured to convert the quarter-turn rotation of an operating lever into simultaneous axial rotation and axial translation of a cleat. With continuing reference to Fig. 25, and as additionally shown at least partially in Figs. 26-28, each cleat assembly 404 may include a cleat 430, a cam follower 432, a biasing assembly 434, mounting hardware 436, and a preload member 438.

Each cleat 430 may be any rigid member having a shaft with an enlarged head portion at a distal end, configured to pass through the opening of a standard T-slot in one orientation and to be unable to pass through the opening in an orientation 90-degrees from the first orientation. For example, a cleat may have a "J" or an "L" or an inverted "T" shape. In the example shown in Fig. 25, cleat 430 may have an inverted "T" shape, with a hexagonal-cross-section shaft 440 and a cleat head 442 that extends outward on each side of shaft 440 at a distal end. Shaft 440 may have a threaded axial hole 444 formed in a proximal end for receiving mounting hardware 436.

Each cam follower 432 may be any suitable structure configured to facilitate attachment of an operating lever to a cleat, and to provide a cam follower surface for producing axial translation of the cleat. In the example shown in Fig. 25, cam follower 432 may include a roughly cylindrical upper portion 446 having a keyed or gear-like perimeter for mating in a friction fit with a correspondingly shaped aperture in an operating lever. Cam follower 432 may also include a hexagonal axial aperture 448 for receiving cleat shaft 440.

Upper portion 446 may also include a flat upper surface 450, and a lower cam follower surface 452 for interfacing with a raised cam surface 454 located around the upper circumference of aperture 420 on base 410. Raised cam surface 454 may include four portions, each covering 90 degrees of the circumference, each portion curving normally away from the base flange over the 90 degrees.

Cam follower 432 may also include a sleeve 456 protruding downward from upper portion 446 and sized to fit snugly within aperture 420 when the cam follower surface 452 is in contact with cam surface 454. Downward is used in this sense as away from cover 412 and toward base pad 408. From this description, and from the drawings, it should be understood that sleeve 456 of cam follower 432 may be inserted into aperture 420, and that subsequent rotation of cam follower 432 within the aperture will cause the cam follower to move axially in and out of the aperture due to the interaction of the cam and cam follower surfaces.

Together, biasing assembly 434 and mounting hardware 436 may flexibly secure cleat 430 to cam follower 432. Biasing assembly 434 may include any suitable spring-like structure configured to provide a flexible interface between mounting hardware 436 and upper flat surface 450 of cam follower 432. Mounting hardware 436 may be any suitable mechanical connector for connecting cleat shaft 440 to biasing assembly 434. In the example shown in Fig. 25, mounting hardware 436 is a bolt or screw inserted into threaded hole 444 in cleat shaft 440. In this example, biasing assembly 434 is a series of four Belleville washers, arranged in alternating fashion to form a spring between the head of mounting hardware 436 and flat top surface 450 of cam follower 432. Accordingly, cleat 430 is attached to cam follower 432 and will rotate with the cam follower because the hexagonal shaft of the cleat is confined within the hexagonal aperture in the cam follower. However, cleat 430 maintains a degree of axial freedom due to the flexible nature of the attachment, and can slide up and down within the cam follower against the spring force of the washer stack.

Preload member 438 may be any suitable structure configured to flexibly restrain cleat 430 from upward axial movement. Upward is used in this sense as away from base pad 408 and toward cover 412. In the example shown in Fig. 25, preload member 438 may be a leaf spring or other spring-like strip of metal secured to base 410 at one end and resting atop mounting hardware 436 at the other end.

Operating levers 406 may each be an elongated handle pivotable at one end and attached to a cleat assembly such that pivoting the lever also rotates the cleat assembly. In the example shown in Fig. 25, each operating lever 406 includes a keyed mounting hole 460, lever arm 462, and tab 464. Keyed mounting hole 460 may be an aperture in a proximal end of operating lever 406, with an inner perimeter shaped to provide a friction fit with the gear-like outer perimeter of upper portion 436 of cam follower 432. Other mounting methods may be possible, such as bolting, adhering, or otherwise affixing the operating lever to the cam follower. Lever arm 462 may be any suitable handle configured to facilitate user manipulation. In this example, lever arm 462 may be substantially the same length as base 410, and an outer surface of each lever arm 462 may form a portion of the outer surface of dock 400. Tab 464 may protrude from an inner surface of lever arm 462, and may provide an interface for a detent mechanism and/or locking pins (not shown) to keep the lever arm in position adjacent to body 402. Tab 464 may fit into a corresponding aperture or recess 466 in base 410 when operating lever 406 is pivoted fully against the base.

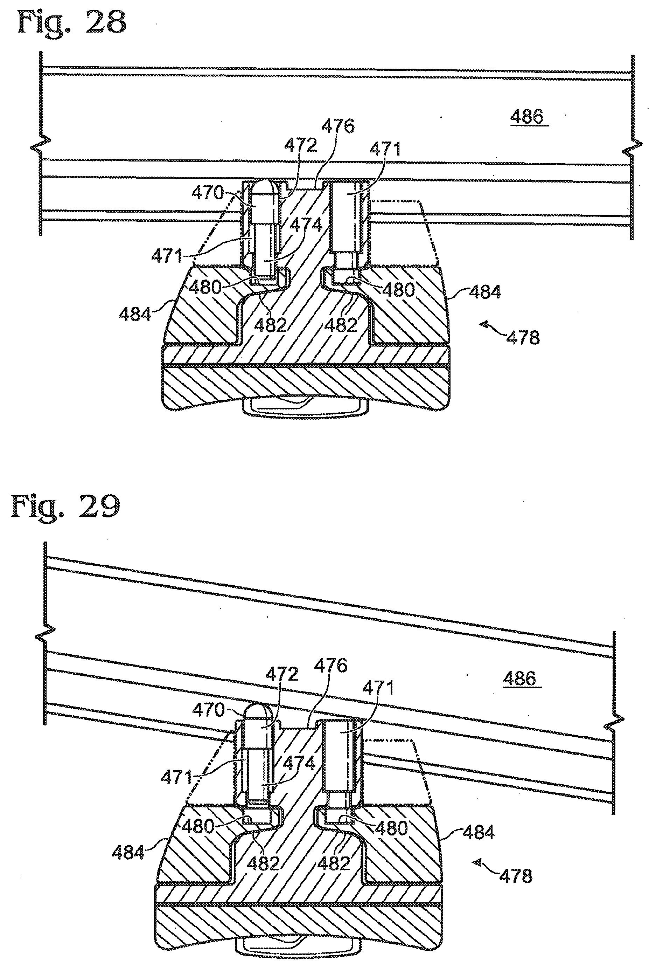

Figs. 28 and 29 are sectional views of an illustrative locking pin mechanism for use in a dock such as dock 400. One or more through-holes may be formed in the upper mounting interface of the central block structure the dock, with a hole passing through the block and aligning with a recess in the tab of an operating lever when the lever is fully pivoted against the body of the dock. A shaped, spring-biased locking pin may be placed into the hole. An upper portion of the locking pin may protrude above the mounting surface due to spring biasing, and the locking pin may be sized such that applying downward force to overcome the biasing causes a lower portion to engage the recess in the tab of the operating lever, thereby preventing repositioning of the operating lever.

As depicted in Figs. 28 and 29, a locking pin 470 may be an elongated cylindrical member having an upper portion 472 with a rounded end and a larger diameter than a lower portion 474. A spring or other biasing device may be used to bias locking pin 470 in a position in one of one or more locking pin holes 471 where the rounded head of upper portion 472 protrudes above a mounting surface 476 of a dock 478. In this position, a lower end of lower portion 474 may remain disengaged from a recess 480 in a tab 482 of an operating lever 484, as shown in Fig. 29.

Fig. 28 shows an external component, in this case a bicycle carrier rail 486, mounted on mounting surface 476 and depressing locking pin 470 into recess 480. Fig. 29 illustrates that tilting the rail greater than approximately 15 degrees may allow locking pin 470 to disengage from recess 480 and thereby unlock lever 484. As a security measure, an end of rail 480 may be operatively locked to a crossbar, such that the end must be freed before the rail may be tilted as described. Any suitable structure may be used to provide locking force to pins such as locking pin 470. In some examples, portions of other components such as fork attachments or other mounting devices may be utilized to interact with a locking pin or pins. In some examples, the portions used may be device locks themselves, thereby simultaneously locking the device to the dock and the dock to a rail.

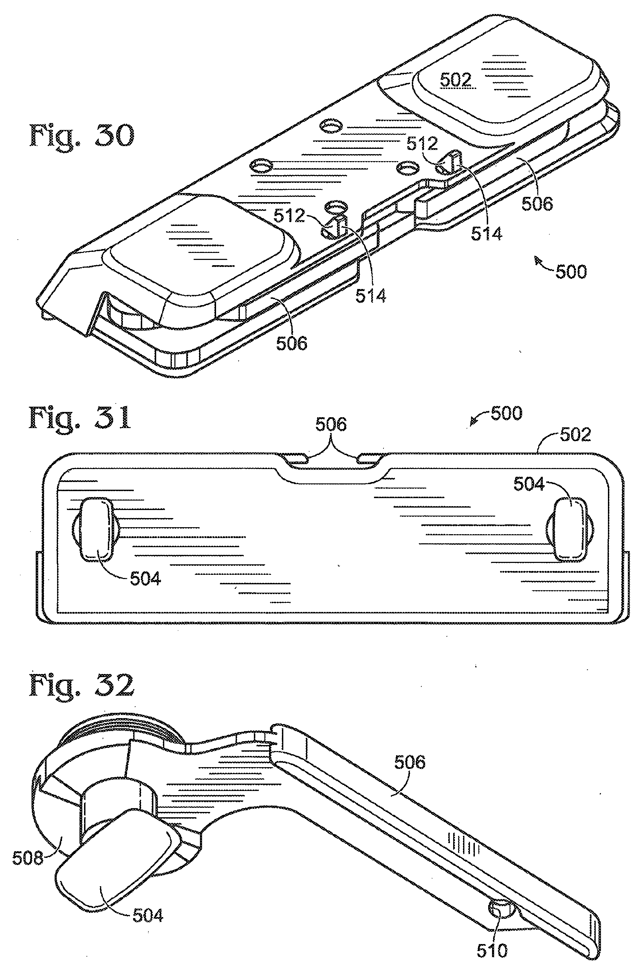

Figs. 30-32 show another example of a dock such as dock 300. Specifically, a dock 500 is depicted in a perspective view in Fig. 30, and a bottom view in Fig. 31. Dock 500 may include a body 502, two cleat assemblies 504, and two operating levers 506. Operation and description of dock 500 is similar to operation and description of dock 400. However, operating levers 506 of dock 500 may be disposed on the same side rather than on opposing sides. This may facilitate access to both levers from that side, and may also reduce the relative size of each lever 506 to allow both levers to fit side by side. Each operating lever 506 may also be constructed as a unit with a cam follower 508, as shown in perspective view in Fig. 32, rather than the keyed two-piece construction of dock 400. Each operating lever 506 may also include a lock hole 510 for locking the lever to body 502. A spring-biased locking pin 512 may be inserted into lock hole 510 by applying force to an upper portion 514 of the pin.

## Claims

1. A bike rack comprising
an elongate body (22) having a first end portion and a second end portion;
a rear wheel receiver (24) connected to the body (22) adjacent the second end portion; and
a fork mount device (30) connected to the body (22) adjacent the first end portion;
**characterized in that** the fork mount device (30) includes a body (38) and a pair of retractable axle portions (34) configured to move between a retracted position in which the axle portions (34) are substantially contained in the body (38), and an extended position in which the axle portions extend sufficiently to engage axle holes of a 15 mm through-hole quick release style bicycle fork.

2. The bike rack of claim 1, wherein the axle portions (34) are substantially hollow for receiving a shaft of a 9mm skewer.

3. The bike rack of claim 1 or 2, further comprising a binding device connected to the rear wheel receiver for securing a rear wheel to the receiver.

4. The bike rack of any of the preceding claims, wherein the fork mount device (30) has a handle (66) that is moveable between a first position and a second position, movement of the handle between the first and second positions causes movement of the axle portions (34) between the retracted and extended positions.

5. The bike rack of claim 4, wherein the fork mount device (30) has a switch, the switch having a first mode position and a second mode position, movement of the axle portions (34) being coupled to movement of the handle when the switch is in the first mode position, and movement of the axle portions being uncoupled to movement of the handle when the switch is in the second mode position.

6. The bike rack of claim 4 or 5, wherein the handle (66) includes a dial device.

7. The bike rack of claim 4 or 5, wherein the handle (66) includes a cam lever.

8. The bike rack of claim 5, wherein the handle (66) includes a cover which prevents the switch from being accessed when the handle is in the first position, and allows access to the switch when the handle is in the second position.

9. The bike rack of any of the preceding claims, wherein the body includes coupling devices (28) configured for connecting the body to a pair of crossbars.

10. The bike rack of claim 9, wherein the coupling devices (28) are configured for clamping to a longitudinal slot in a crossbar.

11. The bike rack of claim 10, wherein the coupling devices (28) are configured for clamping an external surface of a crossbar.

12. The bike rack of claim 11, wherein the coupling devices (28) are configured for adaptively clamping to differently shaped crossbars, including round, square, oval, and elliptical.

13. The bike rack of claim 11, wherein the coupling devices (28) are configured for clamping an aerodynamically shaped crossbar.

14. The bike rack of any of claims 4 to 13, wherein the handle (66) has a closed position for securing a bicycle fork to the fork mount device (30), and a key-operated lock for locking the handle in the closed position.

15. The bike rack of any of claims 4 to 14, wherein the handle (66) has a closed position for securing a bicycle fork to the fork mount device (30), and a button for releasing the handle from the closed position.

## Patentansprüche

1. Fahrradträger, umfassend:
- einen länglichen Körper (22) mit einem ersten Endbereich und einem zweiten Endbereich;
- einen Hinterradaufnehmer (24), der mit dem Körper (22) verbunden ist, der zum zweiten Endbereich benachbart ist; und
- eine Gabelbefestigungsvorrichtung (30), die mit dem Körper (22) verbunden ist, die zum ersten Endbereich benachbart ist;
- **dadurch gekennzeichnet, dass** die Gabelbefestigungsvorrichtung (30) einen Körper (38) und ein Paar von zurückziehbaren Achsenbereichen (34) umfasst, die eingerichtet sind, um sich zwischen einer zurückgezogenen Position, in der die Achsenbereiche (34) im Wesentlichen innerhalb des Körpers (38) enthalten sind, und einer vorstehenden Position bewegen, in der sich die Achsenbereiche ausreichend erstrecken, um mit Achsenöffnungen einer Radgabel mit einer 15mm-Durchgangsloch-Schnellentriegelung in Eingriff zu stehen.

2. Fahrradträger gemäß Anspruch 1, wobei die Achsenbereiche (34) zum Aufnehmen einer Welle eines 9mm-Spanners im Wesentlichen hohl sind.

3. Fahrradträger gemäß Anspruch 1 oder 2, der ferner eine Bindungsvorrichtung, die mit dem Hinterradaufnehmer verbunden ist, zum Sichern eines Hinterrads am Aufnehmer aufweist.

4. Fahrradträger gemäß einem der vorhergehenden Ansprüche, wobei die Gabelbefestigungsvorrichtung (30) einen Griff (66) aufweist, der zwischen einer ersten Position und einer zweiten Position beweglich ist, wobei eine Bewegung des Griffs zwischen den ersten und zweiten Positionen eine Bewegung der Achsenbereiche (34) zwischen den zurückgezogenen und vorstehenden Positionen bewirkt.

5. Fahrradträger gemäß Anspruch 4, wobei die Gabelbefestigungsvorrichtung (30) einen Schalter aufweist, wobei der Schalter eine erste Funktionsposition und eine zweite Funktionsposition aufweist, wobei eine Bewegung der Achsenbereiche (34) mit einer Bewegung des Griffs verbunden ist, wenn sich der Schalter in der ersten Funktionsposition befindet, und eine Bewegung der Achsenbereiche von der Bewegung des Griffs losgelöst ist, wenn sich der Schalter in der zweiten Funktionsposition befindet.

6. Fahrradträger gemäß Anspruch 4 oder 5, wobei der Griff (66) eine Wählvorrichtung umfasst.

7. Fahrradträger gemäß Anspruch 4 oder 5, wobei der Griff (66) einen Exzenterhebel umfasst.

8. Fahrradträger gemäß Anspruch 5, wobei der Griff (66) eine Abdeckung umfasst, die verhindert, dass der Schalter erreichbar ist, wenn sich der Griff in der ersten Position befindet, und einen Zugang zum Schalter ermöglicht, wenn sich der Griff in der zweiten Position befindet.

9. Fahrradträger gemäß einem der vorhergehenden Ansprüche, wobei der Körper Verbindungsvorrichtungen (28) umfasst, die zum Verbinden des Körpers mit einem Paar von Querstangen eingerichtet sind.

10. Fahrradträger gemäß Anspruch 9, wobei die Verbindungsvorrichtungen (28) zum Einspannen in ein Langloch in einer Querstange eingerichtet sind.

11. Fahrradträger gemäß Anspruch 10, wobei die Verbindungsvorrichtungen (28) zum Einspannen einer äußeren Fläche einer Querstange eingerichtet sind.

12. Fahrradträger gemäß Anspruch 11, wobei die Verbindungsvorrichtungen (28) zum anpassungsfähigen Einspannen an unterschiedlich geformten Querstangen, die rund, viereckig, oval und elliptisch sind, eingerichtet sind.

13. Fahrradträger gemäß Anspruch 11, wobei die Verbindungseinrichtungen (28) zum Einspannen einer aerodynamisch geformten Querstange eingerichtet sind.

14. Fahrradträger gemäß einem der Ansprüche 4 bis 13, wobei der Griff (66) eine geschlossene Position zum Sichern einer Fahrradgabel an der Gabelbefestigungsvorrichtung (30) und eine schlüsselbetätigte Verriegelung zum Verriegeln des Griffs in der geschlossenen Position aufweist.

15. Fahrradträger gemäß einem der Ansprüche 4 bis 14, wobei der Griff (66) eine geschlossene Position zum Sichern einer Fahrradgabel an der Gabelbefestigungsvorrichtung (30) und einen Button zum Freigeben des Griffs von der geschlossenen Position aufweist.

## Revendications

1. Support à vélo comprenant :
un corps allongé (22) ayant une première partie d'extrémité et une deuxième partie d'extrémité ;
un récepteur de roue arrière (24) relié au corps (22) de manière adjacente à la deuxième partie d'extrémité ; et
un dispositif de montage de fourche (30) relié au corps (22) de manière adjacente à la première partie d'extrémité ;
**caractérisé en ce que** le dispositif de montage de fourche (30) comporte un corps (38) et une paire de parties d'axe escamotables (34) configurée pour se déplacer entre une position rétractée dans laquelle les parties d'axe (34) sont essentiellement logées dans le corps (38), et une position étendue dans laquelle les parties d'axe s'étendent de manière suffisante pour s'engager avec des trous d'axe d'une fourche de bicyclette à trou traversant de 15 mm à démontage rapide.

2. Support à vélo de la revendication 1, dans lequel les parties d'axe (34) sont essentiellement creuses pour recevoir un arbre d'une broche de 9 mm.

3. Support à vélo de la revendication 1 ou 2, comprenant en outre un dispositif de liaison relié au récepteur de roue arrière pour fixer une roue arrière au récepteur.

4. Support à vélo de l'une des revendications précédentes, dans lequel le dispositif de montage de fourche (30) a une poignée (66) qui est mobile entre une première position et une deuxième position, le mouvement de la poignée entre les première et deuxième positions entraîne le mouvement des parties d'axe (34) entre les positions rétractée et étendue.

5. Support à vélo de la revendication 4, dans lequel le dispositif de montage de fourche (30) a un commutateur, le commutateur ayant une position de premier mode et une position de deuxième mode, le mouvement des parties d'axe (34) étant couplé au mouvement de la poignée lorsque le commutateur se trouve dans la position de premier mode, et le mouvement des parties d'axe étant découplé du mouvement de la poignée lorsque le commutateur se trouve dans la position de deuxième mode.

6. Support à vélo de la revendication 4 ou 5, dans lequel la poignée (66) comporte un dispositif à cadran.

7. Support à vélo de la revendication 4 ou 5, dans lequel la poignée (66) comprend un levier à came.

8. Support à vélo de la revendication 5, dans lequel la poignée (66) comporte un couvercle qui empêche le commutateur d'être accessible lorsque la poignée se trouve dans la première position, et permet l'accès au commutateur lorsque la poignée se trouve dans la deuxième position.

9. Support à vélo de l'une des revendications précédentes, dans lequel le corps comporte des dispositifs de couplage (28) configurés pour relier le corps à une paire de traverses.

10. Support à vélo de la revendication 9, dans lequel les dispositifs de couplage (28) sont configurés pour être serrés sur une fente longitudinale dans une traverse.

11. Support à vélo de la revendication 10, dans lequel les dispositifs de couplage (28) sont configurés pour serrer une surface externe d'une traverse.

12. Support à vélo de la revendication 11, dans lequel les dispositifs de couplage (28) sont configurés pour être serrés de manière adaptative sur des traverses de différentes formes y compris des formes ronde, carrée, ovale, elliptique.

13. Support à vélo de la revendication 11, dans lequel les dispositifs de couplage (28) sont configurés pour serrer une traverse de forme aérodynamique.

14. Support à vélo de l'une des revendications 4 à 13, dans lequel la poignée (66) a une position fermée pour fixer une fourche de bicyclette au dispositif de montage de fourche (30), et un verrou à clé pour verrouiller la poignée dans la position fermée.

15. Support à vélo de l'une des revendications 4 à 14, dans lequel la poignée (66) a une position fermée pour fixer une fourche de bicyclette au dispositif de montage de fourche (30), et un bouton pour libérer la poignée de la position fermée.
